# DEMANDE DE BREVET EUROPEEN

(11) **EP 1 104 146 A1**
(43) Date de publication de la demande: **30.05.2001**
(21) Numéro de dépôt: 00203996.4
(22) Date de dépôt: 14.11.2000
(51) Int. Cl.: H04M 1/253, H04M 1/725

(54) **Appareil téléphonique numérique sans fil enregistreur de parole**

(30) Priorité: 23.11.1999 FR 9914742
(71) Demandeur: Koninklijke Philips Electronics N.V., 5621 BA Eindhoven (NL)
(72) Inventeur: Delong, Valère, 75008 Paris (FR)
(74) Mandataire: Chaffraix, Jean

(57) **Abrégé**

L'appareil est muni d'un processeur de signal (9) qui comporte un vocodeur (8) constitué par un compresseur de parole (3) pour la liaison montante et un décompresseur de parole (13) pour la liaison descendante ; selon l'invention, pour effectuer l'enregistrement d'une conversation téléphonique, ledit processeur de signal (9) comporte aussi : un additionneur de signal (16) pour sommer bit à bit chaque paire d'échantillons de parole qui apparaît à l'entrée D dudit compresseur de parole (3) pour l'un et à la sortie C dudit décompresseur de parole (13) pour l'autre échantillon et pour transformer chaque paire en un échantillon de parole somme, un compresseur de parole sommée (17, 3) pour compresser des groupes d'échantillons de signal de parole somme successifs en des trains de bits codés homologues successifs, et une mémoire non volatile (18) pour emmagasiner lesdits trains de bits codés.

Application à la téléphonie mobile.

## Description

La présente invention concerne un appareil téléphonique numérique sans fil, muni d'un processeur de signal qui comporte un vocodeur constitué par un compresseur de parole pour la liaison montante et un décompresseur de parole pour la liaison descendante.

De façon générale l'invention s'applique à un appareil de radiocommunication portable ou mobile et en particulier à un téléphone cellulaire mobile ou à un téléphone résidentiel sans fil de type numérique.

Les progrès récemment réalisés dans le traitement numérique de l'information, l'information véhiculée par la voix notamment et la miniaturisation toujours plus poussée des circuits intégrés, sont en train de révolutionner les techniques de la téléphonie en permettant la réalisation d'appareils compacts, légers, à un prix raisonnable et qui peuvent accompagner leur utilisateur dans ses déplacements. Par ailleurs, parallèlement aux progrès réalisés dans l'électronique proprement dite, les progrès d'ordre technologique plus généralement, permettent d'envisager pour des combinés de téléphone cellulaire munis de microprocesseurs, l'adjonction de fonctions qui ne se trouvent guère sur des combinés de téléphone filaire classique, telle la présence d'un dispositif d'affichage à usage multiple notamment.

Une autre fonction intéressante dont il est possible de munir un téléphone mobile est celle que réalise un magnétophone, c'est-à-dire l'enregistrement de la voix en l'occurrence. Pour un appareil de type dit "magnétophone", indépendamment de son principe de fonctionnement, l'entrée du signal sonore est unique, en ce sens que la voix est captée par un microphone ou, éventuellement, le signal de parole peut être fourni sous forme électrique à une entrée d'enregistrement prévue à cet effet mais il n'est pas envisagé que les deux sources de parole soient activées en même temps.

Il en va différemment pour un téléphone mobile où lors d'une communication, une source est constituée par la voix de l'utilisateur proche à l'entrée du microphone alors que celle relative au locuteur distant consiste en un signal radioélectrique sous forme de bits codés sur l'antenne du téléphone. Il est connu, par exemple du brevet US 5,630,205 de mettre à profit la présence du microprocesseur pour enregistrer des messages provenant soit de l'utilisateur, soit du correspondant en utilisant les circuits de compression de données et les algorithmes qui existent déjà dans le mobile, conjointement avec une mémoire prévue à cet effet et donc additionnelle.

Avec cette façon de procéder, il est possible d'économiser de la place mémoire, en emmagasinant la parole sous forme de groupes d'échantillons compressés se présentant périodiquement sous forme de trains de bits codés ; cependant, ce qui est mis en mémoire correspond à toute la durée d'enregistrement sur la liaison montante ou sur la liaison descendante et, dans le cas où l'enregistrement interne à l'appareil a lieu au cours d'une communication, la durée à prendre en compte pour l'enregistrement correspond à la durée T de la conversation, qu'il s'agisse de la liaison montante ou de la liaison descendante, soit en tout 2T (alors que seule la moitié de l'information contenue dans ladite conversation est enregistrée pour chaque liaison).

Un but de la présente invention est d'enregistrer dans une mémoire d'un téléphone numérique sans fil tout ou partie d'une conversation téléphonique prenant en compte la voix des deux locuteurs, proche et distant.

Un autre but de l'invention est d'enregistrer dans une mémoire d'un téléphone numérique sans fil tout ou partie d'une conversation téléphonique de façon qu'à la restitution l'on puisse entendre la voix des deux locuteurs pendant une durée sensiblement égale à celle de l'enregistrement.

Ces deux buts sont atteints et les inconvénients de l'art antérieur sont atténués grâce au fait que l'appareil téléphonique indiqué au premier paragraphe est remarquable en ce que, pour l'enregistrement d'une conversation téléphonique, ledit processeur de signal comporte aussi un additionneur de signal pour sommer bit à bit chaque paire d'échantillons de parole qui apparaît à l'entrée D dudit compresseur de parole pour l'un et à la sortie C dudit décompresseur de parole pour l'autre échantillon et pour transformer chaque paire en un échantillon de parole somme, un compresseur de parole sommée pour compresser des groupes d'échantillons de signal de parole somme successifs en des trains de bits codés homologues successifs, et une mémoire non volatile pour emmagasiner lesdits trains de bits codés.

L'idée de base de l'invention consiste à mettre à profit le fait que, lors d'une conversation la règle de l'alternat s'applique en pratique, pour l'essentiel, pour permettre à chaque locuteur de comprendre le message émis par l'autre. Par rapport à l'art connu, la mémoire non volatile destinée à emmagasiner le signal de parole compressé et codé est toujours nécessaire, mais sa capacité peut être ainsi réduite de moitié.

De façon connue, ledit processeur de signal comporte des premiers moyens de commande pour compresser, au moyen dudit compresseur de parole pour la liaison montante, un nombre prédéterminé N d'échantillons de parole successifs pendant chaque durée At égale au temps d'apparition desdits N échantillons et les fournit sous forme d'un premier train de bits codés à une sortie B dudit compresseur de parole. Avantageusement, ledit compresseur de parole sommée s'identifie audit compresseur de parole pour la liaison montante.

Un premier mode de réalisation préféré de l'invention est remarquable en ce que ledit appareil téléphonique sans fil comporte des deuxièmes moyens de commande pour additionner au moyen dudit additionneur N desdites paires d'échantillons pendant une première partie de la durée At, des troisièmes moyens de commande pour compresser sous forme de trains de bits codés au moyen dudit compresseur de parole N échantillons de signal somme pendant une deuxième partie de chaque durée At disjointe de ladite première partie et des quatrièmes moyens de commande pour emmagasiner dans ladite mémoire non volatile chacun desdits trains de bits codés.

Selon ce mode de réalisation, simple en ce qui concerne sa structure et son mode de fonctionnement, les ressources du processeur de signal utilisées pour effectuer les opérations de compression sont suffisantes pour que l'opération de compression de parole puisse s'effectuer au moins deux fois plus rapidement que ne le requerrait le débit du signal de parole en entrée de la liaison montante. Il devient ainsi possible de compresser en temps réel, en alternance à chaque période Δt, chaque groupe de N échantillons de parole issus du microphone ainsi que chaque groupe de N échantillons de parole sommée émis pendant la période At précédente, moyennant une mémorisation de très courte durée de ces échantillons de parole, au moyen de mémoires tampon.

Il peut se faire cependant que les ressources du processeur de signal pour le codage de la parole soient insuffisantes pour pouvoir compresser en temps réel à la fois le flux de parole incident et le flux de parole sommée ; auquel cas un deuxième mode de réalisation préféré de l'invention peut être mis en oeuvre, étant considéré que, au cours de chaque durée At un deuxième train de bits codés représentatif de N échantillons de parole apparaît sur une entrée A dudit décompresseur de parole sur la liaison descendante. Ce deuxième mode de réalisation est remarquable en ce que ledit processeur de signal comporte d'une part une mémoire intermédiaire double commandée en écriture par des cinquièmes moyens de commande pour emmagasiner séparément chaque premier et deuxième trains de bits codés successifs qui apparaissent sur ladite entée A et ladite sortie B lors de ladite conversation téléphonique, d'autre part des sixièmes moyens de commande pour, après la fin de la conversation, extraire lesdits premier et deuxième trains de bits codés de ladite mémoire intermédiaire double et les décompresser au moyen dudit décompresseur de parole pour la liaison descendante et pour les sommer, paire par paire d'échantillons de parole contemporains décompressés au moyen dudit additionneur, et des septièmes et huitièmes moyens de commande, respectivement, pour compresser au moyen dudit compresseur de parole lesdits échantillons de signal somme et les fournir sous forme de troisièmes trains de bits codés à ladite mémoire non volatile.

Ce deuxième mode de réalisation implique une mise en mémoire intermédiaire de la parole montante et descendante, sous forme codée, et c'est seulement après la fin de chaque conversation que cette information présente en mémoire intermédiaire est traitée par décompression, sommation et recompression, de façon à obtenir la même information compressée, en mémoire non volatile, que pour le premier mode de réalisation indiqué plus haut.

Pour les deux modes de réalisation indiqués ci-dessus, il est avantageux que ledit processeur de signal comporte en outre des neuvièmes moyens pour, après l'enregistrement d'une conversation, extraire lesdits trains de bits codés de ladite mémoire non volatile et les décompresser au moyen dudit décompresseur de parole pour la liaison descendante de façon à pouvoir restituer par l'intermédiaire du décodeur numérique-analogique et du haut-parleur ou de l'écouteur dudit appareil téléphonique, ladite conversation préalablement enregistrée.

La description qui suit, en regard des dessins annexés, le tout donné à titre d'exemple non limitatif, fera bien comprendre comment l'invention peut être réalisée.

La figure 1 est un schéma synoptique d'un premier mode de réalisation de l'invention.

La figure 2 est un schéma synoptique d'un deuxième mode de réalisation de l'invention.

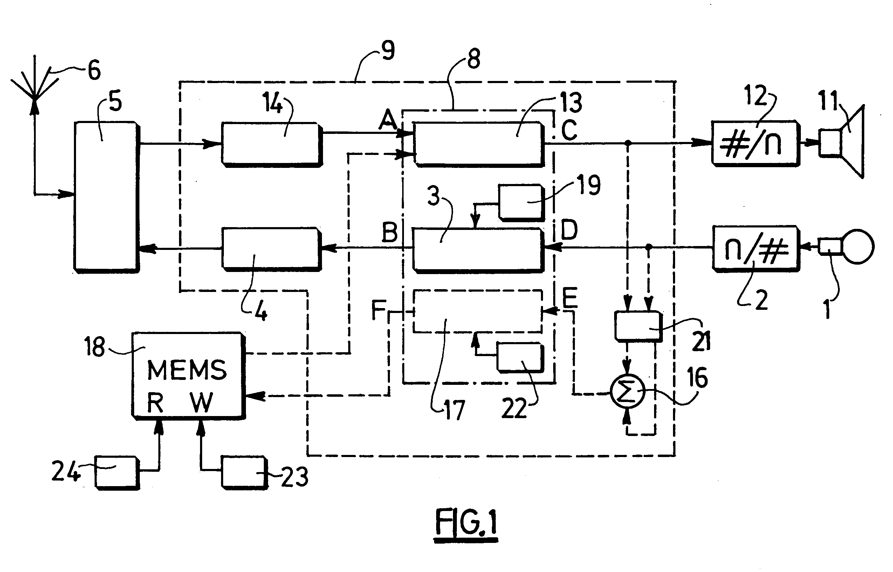

Sur la figure 1 est représenté schématiquement un appareil téléphonique numérique sans fil, sous la forme de ses principaux organes dessinés pour la plupart comme des blocs fonctionnels.

De façon connue, une liaison montante, destinée au locuteur proche, comporte en cascade un microphone 1, un convertisseur numérique-analogique 2, un compresseur de parole pour la liaison montante 3, muni d'une entrée D et d'une sortie B, un codeur de canal 4, un circuit radio émetteur-récepteur 5 et une antenne émettrice-réceptrice 6. Symétriquement, la liaison descendante pour le locuteur éloigné comporte, après l'antenne 6 et le circuit radio 5, un décodeur de canal 14, un décompresseur de parole pour la liaison descendante 13, muni d'une entrée A et d'une sortie C, un circuit numérique analogique 12 et un élément 11 qui peut être un haut-parleur ou un écouteur. L'ensemble constitué par les éléments 3 et 13, à l'intérieur d'une ligne en trait mixte 8, est connu sous le nom de vocodeur ; plus généralement, l'ensemble du vocodeur 3, 13, des éléments 4 et 14 et d'autres éléments encore à décrire est constitué par un microprocesseur délimité par le trait interrompu 9, qui constitue la partie numérique de l'appareil où sont effectués des codages et des décodages ainsi que des mises en mémoire de signaux de parole émise ou reçue par l'appareil.

Si l'on considère la liaison montante, la voix est d'abord numérisée en 2, par exemple, pour la norme GSM, et apparaît en D sous forme d'échantillons de n = 13 bits à raison de fs = 8000 échantillons par seconde, soit un débit binaire : n.fs = 104 kbits/s. Dans le compresseur 3, ces échantillons sont codés, à raison de N = 160 par tranche de 20 ms (Δt = 20 ms dans la suite du texte). Sans rentrer dans les détails, il en résulte à la sortie B un modèle mathématique de la voix pour chaque durée Δt, codé sur un nombre de bits Kr fois plus faible qu'à l'entrée D, soit n.fs/Kr (Kr, taux de compression, est égal à 8 pour la norme GSM). Symétriquement le signal de parole lointaine apparaît à l'entrée A du décompresseur 13 selon le même modèle mathématique de la voix qu'en B, soit un débit binaire encore égal à : n.fs/Kr, (débit de 13 kbits/s au lieu de 104 kbits/s et, plus précisément, des paquets codés de 260 bits tous les : Δt = 20 ms, pour le mode GSM).

Lorsqu'on souhaite enregistrer la voix qui transite dans l'appareil, on peut prélever le signal de parole soit en D, soit en B s'il s'agit de la liaison montante ; soit en C, soit en A s'il s'agit de la liaison descendante, et inscrire le signal ainsi prélevé dans une mémoire prévue à cet effet. Si la durée d'une conversation est égale à T, les capacités mémoire nécessaires pour l'enregistrement de la parole sont respectivement égales en nombre de bits :
à C1 = T x n x fs pour le signal prélevé en C ou en D,
et à C2 = 2T x n x fs pour l'ensemble de la conversation (liaison montante et liaison descendante).

Si le signal est prélevé sous forme codée, la capacité mémoire est Kr fois plus faible, soit :
C3 = T x n x fs/Kr pour le signal prélevé en A ou en B,
et C4 = 2T x n fs/Kr pour l'ensemble de la conversation ;
dans ces derniers cas on gagne de la capacité mémoire dans le rapport Kr mais un décodage de la voix est nécessaire pour la restitution de l'une ou l'autre liaison.

L'invention se propose de créer dans un mobile un nouveau mode d'enregistrement de la parole qui soit d'un rendement deux fois meilleur en taille mémoire pour l'enregistrement d'une conversation. Le mode consiste à additionner la parole sur la liaison montante à celle sur la liaison descendante. Deux modes de réalisation sont décrits ci-dessous, dont les différences résultent de la puissance de traitement plus ou moins grande dont est capable le microprocesseur du mobile.

L'addition de la parole ne peut s'effectuer que lorsque cette dernière se présente sous la forme d'échantillons numériques, c'est-à-dire sous forme non codée (échantillons sur 13 bits au débit de 8000 échantillons par seconde pour le GSM).

Le premier mode de réalisation de l'invention de la figure 1 comporte un additionneur 16 pour, pendant une conversation téléphonique, sommer bit à bit chaque paire d'échantillons qui apparaît à l'entrée D pour l'un et à la sortie C pour l'autre échantillon. A la sortie de l'additionneur 16 apparaît en conséquence un échantillon numérique de parole somme (sur un format de 14 bits). Chaque échantillon somme en E pourrait être mémorisé sous cette forme pour être restitué après la conversation, à travers les éléments 12 et 11. De préférence, selon l'invention, les échantillons somme sont compressés dans un compresseur de parole sommée 17 et se présentent en sortie F sous la forme d'échantillons codés, sous la même forme qu'en A ou en B ; ceci permet de gagner le rapport Kr sur le nombre de bits à mémoriser (voir ci-dessus le débit binaire en A et B par rapport au débit binaire en C et D). Les échantillons codés en F sont fournis à une mémoire non volatile 18, de préférence une mémoire flash. Pour la restitution ultérieure du signal de conversation, le signal codé contenu dans la mémoire 18 devra être décodé, c'est-à-dire traité par le décompresseur de parole pour la voie descendante 13, qui effectue en numérique un filtrage analogue à celui du larynx, avant que le signal ainsi décodé soit fourni aux éléments terminaux 12 et 11 de la liaison descendante.

Les compresseurs de parole 3 et 17 ont été représentés séparément, sur la figure 1 pour faciliter la description. En pratique, il s'agit, avantageusement, du même élément, dont la fonction se réduit à des calculs de filtrage, pourvu que ces calculs soient effectués assez rapidement, c'est-à-dire que le compresseur 3 puisse traiter en le codant chaque paquet ou groupe de N échantillons qui apparaît en D pendant chaque durée Δt, au cours de la première moitié de la durée Δt qui suit ladite durée Δt, soit pendant une durée au plus égale à Δt/2; ainsi, au cours de la deuxième moitié de cette durée Δt suivante, le compresseur 3 est à même de traiter les N échantillons de parole somme qui apparaissent en sortie de l'additionneur 16. En pratique, toutes les opérations et les calculs indiqués ci-dessus sont effectués par programmation du microprocesseur délimité par le trait 9 ; pour mieux fixer les idées cependant, on a représenté différents moyens de commande ou faisant office de mémoire tampon pour les signaux numériques :
Des premiers moyens de commande 19 pour commander la compression en 3, de chaque paquet de N échantillons de parole issu du convertisseur 2, pendant un temps inférieur à Δt/2.
Des deuxièmes moyens 21 pour stocker séparément N paires d'échantillons de parole successifs qui apparaissent en C et D puis les fournir sur deux entrées à l'additionneur 16.
Des troisièmes moyens 22 qui commandent, en 17 la même opération que 19 en 3, mais pour des échantillons de parole somme.
Des quatrièmes moyens 23 pour la commande en écriture de la mémoire non volatile 18, pour emmagasiner chaque train de bits codés issu du compresseur 17 (respectivement 3). Des moyens supplémentaires 24 permettant la lecture ultérieure de la mémoire 18.

Le premier mode de réalisation décrit ci-dessus peut aussi être défini sous la forme d'un procédé
d'enregistrement d'une conversation téléphonique dans un appareil téléphonique numérique sans fil muni d'un processeur de signal 9 qui comporte un vocodeur 8 constitué par un compresseur de parole 3 pour la liaison montante et un décompresseur de parole 13 pour la liaison descendante et remarquable en ce que ledit processeur 9 est programmé pour exécuter les commandes suivantes, au cours d'une conversation téléphonique :
a) l'addition bit à bit dans un additionneur 16 de chaque paire d'échantillons de parole qui apparaît à l'entrée D du compresseur de parole 3 pour l'un et à la sortie C dudit décompresseur de parole 13 pour l'autre échantillon, pour fournir, pour chaque paire, un échantillon de signal de parole somme,
b) la compression dudit signal de parole somme au moyen dudit compresseur de parole 3 pour la liaison montante sous forme de trains de bits codés en un modèle mathématique de la parole,
c) la fourniture desdits trains de bits codés à une mémoire non volatile 18.

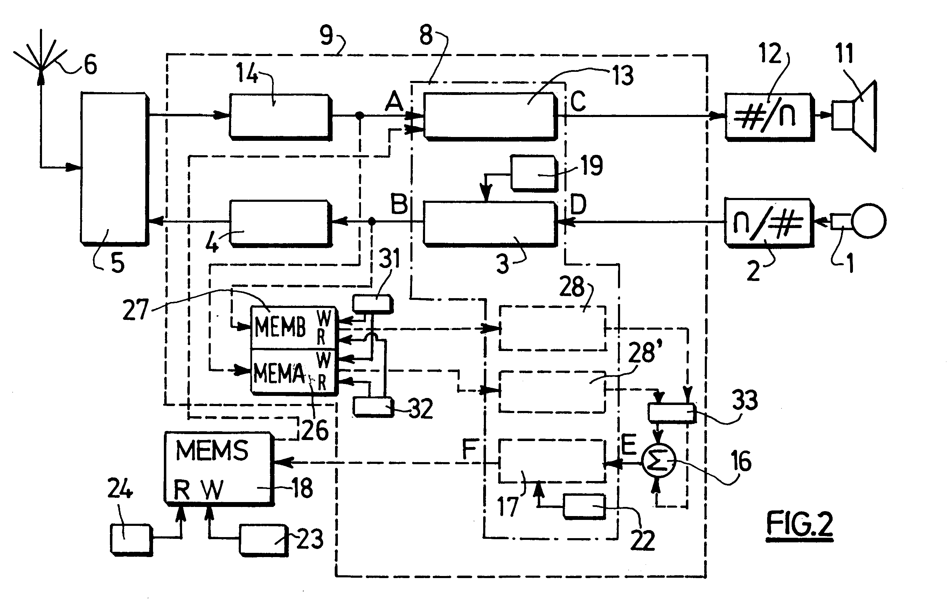

Selon le modèle de téléphone mobile considéré, il peut se faire que le microprocesseur qu'il comporte ne soit pas assez puissant pour que le compresseur de parole pour la voie montante 3 puisse traiter (filtrer, coder) 2N échantillons de parole pendant chaque durée Δt. Dans ce cas, il peut être mis en oeuvre un deuxième mode de réalisation de l'invention illustré par la figure 2, sur laquelle on retrouve les mêmes éléments 1, 2, 3, 4, 5, 6, 8, 14, 13, 12, 11, 16, 18, 19 avec sensiblement les mêmes fonctions, sauf en ce qui concerne le compresseur de parole 3 et l'additionneur d'échantillons de parole 16.

Le schéma de la figure 2 est plus complexe que celui de la figure 1, dû au fait que le compresseur 3 n'est pas assez puissant pour traiter 2N échantillons de parole pendant chaque durée Δt. Pour pallier cet inconvénient, la parole sur chacune des deux liaisons montante et descendante est emmagasinée, pendant tout le temps de la conversation, dans deux mémoires intermédiaires jumelles 26, 27 sous forme codée, c'est-à-dire qu'à un train de bits représentatif de N échantillons sur la liaison descendante stocké en mémoire 26 (MEMA), correspond avec le même rang en mémoire 27 (MEMB), le train de bits contemporain représentatif de N échantillons sur la liaison montante.

Ce deuxième mode de réalisation peut être défini sous la forme d'un procédé d'enregistrement d'une conversation téléphonique sans fil muni d'un processeur de signal qui comporte un vocodeur 8 constitué par un compresseur de parole 3 pour la liaison montante et un décompresseur de parole 13 pour la liaison descendante, remarquable en ce que ledit processeur est programmé pour exécuter les commandes successives suivantes :
en premier lieu au cours d'une conversation téléphonique :
   a) la mise dans une mémoire intermédiaire double 26, 27 séparément de premiers et deuxièmes trains de bits codés qui apparaissent sur une entrée A dudit décompresseur de parole pour la liaison descendante et sur une sortie B dudit compresseur de parole pour la liaison montante ;
en second lieu après la fin de ladite conversation téléphonique :
   b) l'extraction desdits trains de bits codés de ladite mémoire intermédiaire double et leur décompression au moyen dudit décompresseur de parole 28, 28' (13) pour la liaison descendante,
   c) l'addition paire par paire, dans un additionneur 16, d'échantillons de parole contemporains décompressés ainsi obtenus à l'étape b),
   d) la compression au moyen dudit compresseur de parole 17 (3) pour la voie montante des échantillons de parole somme obtenus à l'étape c),
   e) la mise dans une mémoire non volatile 18 des trains de bits codés obtenus à l'étape d).

Pour la mise en oeuvre du deuxième mode de réalisation de l'invention il est prévu (Fig. 2) des cinquièmes moyens de commande 31 pour emmagasiner séparément chaque premier et deuxième trains de bits codés successifs qui apparaissent sur l'entrée A et la sortie B lors d'une conversation téléphonique, chaque train en A ou B étant représentatif d'un temps de conversation égal à Δt. Il est aussi prévu des sixièmes moyens de commande 32 pour, après la fin de la conversation, extraire lesdits premier et deuxième trains de bits codés avec un léger décalage temporel pour qu'ils soient décompressés l'un à la suite de l'autre en 28 et 28', c'est-à-dire en pratique au moyen du décompresseur de parole 13, et ainsi fournis aux moyens 33 qui sont analogues aux deuxièmes moyens de la figure 1, à ceci près que les moyens 33 reçoivent les paires de N échantillons à sommer en séquence alors que les moyens 21 les reçoivent en parallèle. A partir de l'élément 33, la suite des opérations pour l'emmagasinage des signaux de parole et la restitution ultérieure de la conversation peuvent s'effectuer de façon analogue à ce qui est décrit ci-dessus pour le premier mode de réalisation, étant entendu cependant que le téléphone mobile est, pour le deuxième mode, indisponible pendant tout le temps nécessaire, après la conversation, à l'enregistrement final en 18 de cette conversation, qui libère en même temps les mémoires intermédiaires 26, 27.

On notera que, dans un même téléphone mobile plusieurs vocodeurs peuvent exister, qui ont des performances différentes ; dans un même appareil GSM notamment peuvent coexister un vocodeur dit Full-Rate, FR (en anglais) avec un vocodeur haute définition dit Enhanced-Full-Rate EFR (en anglais). Le mode FR requiert 13 MIPS (Millions d'Instructions Par Seconde) alors que le mode EFR nécessite 26 MIPS. On peut prévoir de programmer un tel appareil pour qu'il fonctionne selon le premier mode de réalisation de l'invention lorsque son vocodeur est en mode FR et selon le deuxième mode de réalisation lorsque son vocodeur est en mode EFR.

A noter aussi que le format des échantillons de parole en sortie de l'additionneur 16 dépasse d'un bit celui des échantillons présents sur ses entrées ; par souci d'homogénéité, on peut prévoir, pour le premier et le deuxième modes de réalisation que les moyens 21, respectivement 33 comportent, juste en amont de l'additionneur 16, un dispositif réducteur qui, pour chaque échantillon de parole à sommer, ne retient comme valeur binaire que celle des bits de rang supérieur au LSB (Least Significant Bit en anglais).

## Revendications

1. Appareil téléphonique numérique sans fil, muni d'un processeur de signal qui comporte un vocodeur constitué par un compresseur de parole pour la liaison montante et un décompresseur de parole pour la liaison descendante, caractérisé en ce que pour l'enregistrement d'une conversation téléphonique, ledit processeur de signal comporte aussi un additionneur de signal pour sommer bit à bit chaque paire d'échantillons de parole qui apparaît à l'entrée D dudit compresseur de parole pour l'un et à la sortie C dudit décompresseur de parole pour l'autre échantillon et pour transformer chaque paire en un échantillon de parole somme, un compresseur de parole sommée pour compresser des groupes d'échantillons de signal de parole somme successifs en des trains de bits codés homologues successifs, et une mémoire non volatile pour emmagasiner lesdits trains de bits codés.

2. Appareil téléphonique selon la revendication 1, dont ledit processeur de signal comporte des premiers moyens de commande pour compresser au moyen dudit compresseur de parole pour la liaison montante un nombre prédéterminé N d'échantillons de parole successifs pendant chaque durée At égale au temps d'apparition desdits N échantillons et les fournir sous forme d'un premier train de bits codés à une sortie B dudit compresseur de parole, caractérisé en ce que ledit compresseur de parole sommée s'identifie audit compresseur de parole pour la liaison montante.

3. Appareil téléphonique selon la revendication 2, caractérisé en ce qu'il comporte des deuxièmes moyens de commande pour additionner au moyen dudit additionneur N desdites paires d'échantillons pendant une première partie de la durée At, des troisièmes moyens de commande pour compresser sous forme de trains de bits codés au moyen dudit compresseur de parole N échantillons de signal somme pendant une deuxième partie de chaque durée At disjointe de ladite première partie et des quatrièmes moyens de commande pour emmagasiner dans ladite mémoire non volatile chacun desdits trains de bits codés.

4. Appareil téléphonique tel que, au cours de chaque durée At un deuxième train de bits codés représentatif de N échantillons de parole apparaît sur une entrée A dudit décompresseur de parole sur la liaison descendante, selon la revendication 2, caractérisé en ce que ledit processeur de signal comporte d'une part une mémoire intermédiaire double commandée en écriture par des cinquièmes moyens de commande pour emmagasiner séparément chaque premier et deuxième trains de bits codés successifs qui apparaissent sur ladite entée A et ladite sortie B lors de ladite conversation téléphonique, d'autre part des sixièmes moyens de commande pour, après la fin de la conversation, extraire lesdits premier et deuxième trains de bits codés de ladite mémoire intermédiaire double et les décompresser au moyen dudit décompresseur de parole pour la liaison descendante et pour les sommer, paire par paire d'échantillons de parole contemporains décompressés au moyen dudit additionneur, et des septièmes et huitièmes moyens de commande, respectivement, pour compresser au moyen dudit compresseur de parole lesdits échantillons de signal somme et les fournir sous forme de troisièmes trains de bits codés à ladite mémoire non volatile.

5. Appareil de téléphone selon l'une des revendications 2 à 4, caractérisé en ce qu'il comporte juste en amont de chacune des deux entrées dudit additionneur un dispositif réducteur qui, pour chaque échantillon de parole à sommer ne retient comme valeur binaire que celle des bits de rang supérieur au LSB.

6. Appareil téléphonique selon l'une des revendications 2 à 5, caractérisé en ce que ledit processeur de signal comporte en outre des neuvièmes moyens pour, après l'enregistrement d'une conversation, extraire lesdits trains de bits codés de la mémoire non volatile et les décompresser au moyen dudit décompresseur de parole pour la liaison descendante de façon à pouvoir restituer par l'intermédiaire du décodeur numérique-analogique et du haut-parleur ou de l'écouteur dudit appareil ladite conversation préalablement enregistrée.

7. Procédé d'enregistrement d'une conversation téléphonique dans un appareil téléphonique numérique sans fil muni d'un processeur de signal qui comporte un vocodeur constitué par un compresseur de parole pour la liaison montante et un décompresseur de parole pour la liaison descendante, caractérisé en ce que ledit processeur est programmé pour exécuter les commandes suivantes, au cours d'une conversation téléphonique :
a) l'addition bit à bit dans un additionneur de chaque paire d'échantillons de parole qui apparaît à l'entrée D du compresseur de parole pour la liaison montante pour l'un et à la sortie C dudit décompresseur de parole pour la liaison descendante pour l'autre échantillon, pour fournir, pour chaque paire, un échantillon de signal de parole somme,
b) la compression dudit signal de parole somme au moyen dudit compresseur de parole 3 pour la liaison montante sous forme de trains de bits codés en un modèle mathématique de la parole,
c) la fourniture desdits trains de bits codés à une mémoire non volatile 18.

8. Procédé d'enregistrement d'une conversation téléphonique dans un appareil téléphonique numérique sans fil muni d'un processeur de signal qui comporte un vocodeur constitué par un compresseur de parole pour la liaison montante et un décompresseur de parole pour la liaison descendante, caractérisé en ce que ledit processeur est programmé pour exécuter les commandes successives suivantes :
en premier lieu au cours d'une conversation téléphonique :
a) la mise dans une mémoire intermédiaire double séparément de premiers et deuxièmes trains de bits codés qui apparaissent sur une entrée A dudit décompresseur de parole pour la liaison descendante et sur une sortie B dudit compresseur de parole pour la liaison montante ;
en second lieu après la fin de ladite conversation téléphonique :
b) l'extraction desdits trains de bits codés de ladite mémoire intermédiaire double et leur décompression au moyen dudit décompresseur de parole pour la liaison descendante,
c) l'addition paire par paire, dans un additionneur, d'échantillons de parole contemporains décompressés ainsi obtenus à l'étape b),
d) la compression au moyen dudit compresseur de parole pour la voie montante des échantillons de parole somme obtenus à l'étape c),
e) la mise dans une mémoire non volatile des trains de bits codés obtenus à l'étape d).

9. Appareil téléphonique selon l'une des revendications 1 à 6 mettant en oeuvre le procédé selon la revendication 7 ou la revendication 8, constitué par un téléphone cellulaire mobile ou un téléphone résidentiel sans fil.
